# EUROPEAN PATENT APPLICATION

(11) **EP 1 331 285 A2**
(43) Date of publication of application: **30.07.2003**
(21) Application number: 03001354.4
(22) Date of filing: 24.01.2003
(51) Int. Cl.: C23C 18/16

(54) **Thin-layer metal film**

(30) Priority: 25.01.2002 JP 2002016707
(71) Applicant: FUJI PHOTO FILM CO., LTD., Kanagawa 250-01 (JP)
(72) Inventor: Kano, Takeyoshi, Yoshida-cho, Haibara-gun Shizuoka-ken (JP); Kawamura, Koichi, Yoshida-cho, Haibara-gun Shizuoka-ken (JP)
(74) Representative: HOFFMANN - EITLE

(57) **Abstract**

A thin-layer metal film that is high in productivity, can be prepared in a simple step, has a high density, and is superior in durability. The thin-layer metal film is obtained by reducing a metal salt on a surface of a substrate where a metal salt-containing hydrophilic graft polymer chain is present. The thin-layer metal film is obtained by reducing a metal ion adsorbed on a hydrophilic functional group of the hydrophilic graft polymer chain with a reducing agent to deposit a metal.

## Description

### BACKGROUND OF THE INVENTION

### Field of the Invention

The present invention relates to a thin-layer metal film, and in particular, to a thin-layer metal film comprising a substrate having a metal film such as copper formed thereon, which is useful as electromagnetic radiation shielding films, magnetic films, or hydrogen permeable films and which has a high density and is superior in durability and productivity.

### Description of the Related Art

With the development of an advanced information society, the development of electronic instruments is remarkable. Unnecessary electronic radiations emitted from these electronic instruments cause communication obstacle or malfunction of the electronic instruments themselves, leading to social problems. Thus, in order to inhibit the obstacle of the unnecessary electronic radiations emitted from these electronic instruments, there is employed a method in which a thin-layer metal film is formed on the surface of a plastic case covering the electronic instrument, thereby making the plastic itself conductive.

Further, with respect to the development of the computer technologies supporting the development of the advanced information society, not only high integration of semiconductor LSIs but also high recording density of magnetic discs account for large factors. For realizing the high recording density of magnetic discs, minimization of defects and high smoothness of a magnetic characteristic medium layer are demanded. Thus, there is currently employed a method in which a metal film having magnetic characteristics is formed on the surface of a substrate.

In addition, besides the advanced information of the society, it has been being demanded to develop clean energy sources in place of fossil fuels such as petroleum and coal. At present, hydrogen is widely noticed as the most powerful candidate for clean energy sources because when it is burnt, it produces only water. Further, hydrogen is widely applicable to chemical processes such as synthesis of ammonia or methanol, hydrogenation of oils and fats, and petroleum refining. The purity to be demanded varies depending on the utility. For example, in the production of semiconductors or powder metallurgy, since contamination of impurities of 0.1 ppm is problematic, a purity in the order of seven nines or more (99.99999 % or more) is necessary. As a method of obtaining such super-high purity hydrogen, there is widely employed a membrane diffusion separation process utilizing a palladium thin film at present.

As described above, the thin-layer metal films take an active part in various fields. As a process for forming a thin-layer metal film, there are known a dry process for accumulating the metal film in vacuo and a wet process for accumulating the metal film in a solution system.

The process for accumulating the metal film in vacuo as referred to herein means a method in which a metal is laminated on the surface of a desired material in an argon gas atmosphere by a vapor phase process such as sputtering and vapor deposition. According to this process, it is possible to form an extremely thin metal film. However, there is a problem that during laminating activated sputtering particles or metal vapors on a substrate, the substrate is damaged by these particles. Especially, when a polymer film is used as the substrate, this problem becomes remarkable. On the other hand, as the wet process for accumulating the metal film in a solution system, an electroless plating process is widely used at present. The reason why the electroless plating process is widely used resides in the matter that it is possible to form a uniform thin film that is free from pinholes or cracks.

Metal thin films obtained by the electroless plating process are extremely superior in electromagnetic radiation shielding effect as compared with membranes obtained by other processes. However, the electroless plating process requires the following complicated steps. That is, the steps include (1) degreasing of the substrate, (2) etching with a chromic acid-sulfuric acid mixed liquid, (3) rinsing with water, (4) neutralization, (5) rinsing with water, (6) sensitization with stannous chloride (acidic with hydrochloric acid), (7) rinsing with water, (8) activation with palladium chloride (acidic with hydrochloric acid), (9) rinsing with water, (10) electroless plating, and (11) rinsing with water. In this process, a step of rinsing with water is necessary for removing the chemical liquid used between the processing and the next processing, and the amount of water to be used or the processing of the waste liquid is problematic. In addition, conditions such as the concentration and pH of the plating bath are complicated, and there was a problem that it is difficult to control these conditions.

Further, from the relation with the processing liquid to be used in each step, the electroless plating processing cannot be applied to all resin substrates. For example, even when the electroless plating process is possible, it cannot be used for a resin substrate that forms fine cracks on the surface thereof during etching in the pre-processing stage. Also, since the plating is generally carried out at high temperatures, the electroless plating cannot be applied to a resin substrate that is likely deformed at high temperatures. Accordingly, there was a problem that the material and grade of the substrate that can be subjected to plating are limited.

As a method for solving these problems, JP-A No. 57-79232 discloses a method of electroless plating on a hydrophilic graft substrate. According to this method, the electroless plating can be carried out without an etching operation. Accordingly, it was possible to omit the etching step with a chromic acid-sulfuric acid mixed liquid, etc., to solve the problems generated in the etching step and to reduce the number of steps. However, the foregoing steps from the step (6), i.e., sensitization with stannous chloride (acidic with hydrochloric acid) to the step (10), i.e., electroless plating and the subsequent step (11), i.e., rinsing with water, which are essential steps for the electroless plating, cannot be omitted, and this method still required complicated steps.

Moreover, in any of the foregoing methods, there were problems that during the formation of the metal film on the resin substrate, the both are poor in affinity with each other; the metal film is likely peeled apart by an external stress, etc.; and that the durability is low.

### SUMMARY OF THE INVENTION

The present invention has been made in order to overcome the technical problems of the related art as described above, and its object is to provide a thin-layer metal film that is high in productivity, can be prepared in a simple step, has a high density, and is superior in durability.

We, the present inventors paid attention to strong ion adsorptivity of hydrophilic graft polymers and made extensive and intensive investigations. As a result, it has been found that a thin-layer metal film having a high density and having superior durability and productivity can be obtained in a simple process in which on a surface of a substrate where a metal salt-containing hydrophilic graft polymer chain is present, the metal salt is reduced, leading to accomplishment of the invention.

Specifically, the thin-layer metal film according to the invention is obtained by reducing a metal salt on the surface of a substrate where a metal salt-containing hydrophilic graft polymer chain is present.

According to the first aspect of the invention, the invention is a thin-layer metal film, which is obtained by reducing a metal salt on a surface of a substrate where a metal salt-containing hydrophilic graft polymer chain is present.

According to the second aspect of the invention, the invention is the thin-layer metal film, wherein the metal salt-containing hydrophilic graft polymer chain is one in which a monomer having a metal salt structure is grafted directly on the surface of the substrate or on an intermediate layer.

According to the third aspect of the invention, the invention is the thin-layer metal film, wherein the metal salt-containing hydrophilic graft polymer chain is one in which a metal ion is adsorbed on an acid group-containing graft polymer.

According to the fourth aspect of the invention, the invention is the thin-layer metal film, wherein the metal salt-containing hydrophilic graft polymer chain is one in which a metal salt is impregnated in a graft polymer having strong affinity with metal salts.

According to the fifth aspect of the invention, the invention is the thin-layer metal film, wherein the metal salt-containing hydrophilic graft polymer chain is obtained by dipping the substrate, on which a hydrophillic graft polymer is present, in a metal salt solution to thereby adsorb the metal salt solution on the graft polymer.

According to another aspect of the invention, the invention is the thin-layer metal film, wherein end terminals of the graft polymer chain are bound to the surface of the substrate or to a surface layer of the substrate, and a functional graft moiety to reveal specific physical properties is not substantially crosslinked.

According to another aspect of the invention, the invention is the thin-layer metal film, wherein the hydrophilic graft polymer chain has a molecular weight in a range from 500 to 5,000,000.

According to another aspect of the invention, the invention is a thin-layer metal film, which is obtained by reducing a metal salt on the surface of a substrate where a metal salt-containing functional graft polymer chain is present.

According to another aspect of the invention, the invention is the thin-layer metal film, wherein end terminals of the functional graft polymer chain are bound to the surface of the substrate or to a surface layer of the substrate, and a functional graft moiety to reveal specific physical properties is not substantially crosslinked.

According to another aspect of the invention, the invention is the thin-layer metal film, wherein the functional graft polymer chain has a molecular weight in a range from 500 to 5,000,000.

According to another aspect of the invention, the invention is the thin-layer metal film, wherein the functional graft polymer chain is bound directly to the surface of the substrate or to an intermediate layer provided on the surface of the substrate.

According to another aspect of the invention, the invention is the thin-layer metal film, wherein the functional graft polymer chain is introduced into a polymer crosslinked film structure.

According to another aspect of the invention, the invention is the thin-layer metal film, wherein the acid group-containing graft polymer is selected from the group consisting of polyacrylic acid, polymethacrylic acid, polystyrenesulfonic acid, poly-2-acrylamide-2-methyl-propanesulfonic acid, salts of these acids, polyacrylamide, and polyvinylacetamide.

According to another aspect of the invention, the invention is the thin-layer metal film, wherein the metal salt is a salt of a metal selected from the group consisting of Ag, Cu, Al, and Ni.

According to another aspect of the invention, the invention is the thin-layer metal film, wherein the metal salt is a salt of a metal selected from the group consisting of Pd, a Pd-Ag alloy, a Pd-Y alloy, a Pd-Gd alloy, a Pd-Ag-Y alloy, and a Pd-Au alloy.

According to another aspect of the invention, the invention is the thin-layer metal film, wherein the reduction is carried out with a solution selected from the group consisting of a hypophosphite solution, a tetrahydroborate solution, a hydrazine solution, and a formalin solution.

The action of the invention is not definitely clear. However, it is estimated that in the invention, a support has a hydrophilic surface where a hydrophilic graft polymer chain is present; when a metal ion is adsorbed on the surface of the support by the function of polar groups present in the hydrophilic graft polymer chain, the metal ion is firmly adsorbed to the hydrophilic graft polymer chain by ionic interaction, to form a uniform metal ion layer having a high density; and when the metal ion is reduced to a metal, an extremely thin metal film having a high density is formed while keeping the interaction with the hydrophilic graft chain, whereby nevertheless the thin film, high durability is revealed. It is estimated that by this interaction, even when an intermediate layer (adhesion-enhancing layer) such as a binder is not provided between the substrate and the metal film, a pure metal material layer having superior adhesiveness to the substrate is formed.

Further, the thin-layer metal film according to the invention is not required to use an electroless plating catalyst such as stannous chloride and palladium chloride during the film formation of a metal by reduction, and there is an advantage that it is possible to form a high-purity metal film having a less amount of impurities as compared with those formed by the electroless plating process.

### DESCRIPTION OF THE PREFERRED EMBODIMENTS

The present invention will be described below in detail.

The thin-layer metal film according to the invention is one in which a substrate having a surface where a metal salt-containing hydrophilic graft polymer chain is present on at least one surface thereof is used, and a metal material surface is formed on the surface of the substrate.

The metal salt-containing hydrophilic graft polymer chain to be used herein may be any of (1) one in which a monomer having a metal salt structure is grafted directly on the surface of a substrate or on an intermediate layer, or (2) one in which a metal ion is adsorbed on an acid group-containing graft polymer. Further, the metal salt-containing hydrophilic graft polymer chain may be (3) one prepared by forming a surface having a graft polymer having high affinity with metal salts, such as polyvinylpyrrolidone and dipping it in a solution having a metal salt dissolved therein, thereby impregnating the metal salt in the graft polymer. Moreover, the metal salt-containing hydrophilic graft polymer chain may be (4) ones prepared by dipping a substrate where a hydrophilic graft polymer is present in a solution having a metal salt dissolved therein, thereby adsorbing the metal salt on the graft polymer. According to the embodiment (4), even in the case where the graft polymer has a positive charge, it is possible to impart the necessary metal salt.

With respect to the process for preparing the metal film, in the case of a substrate in which a monomer previously having a metal salt structure is directly grafted thereon as in the graft polymer chain (1), the reduction may be carried out as it stands; and in the case of an acid group-containing graft polymer substrate as in the graft polymer chain (2), after adsorption of a metal ion, the reduction may be carried out. Further, in the case of a graft polymer having high affinity with metal salts as in the graft polymer chain (3), after dipping of a metal salt, the reduction is carried out. Moreover, even in the case of a graft polymer having a positive charge as in the graft polymer chain (4), the same effect is obtained by dipping a metal salt and then carrying out the reduction. In other words, the metal film can be prepared by at most two processes.

First of all, the substrate having a surface where a graft polymer chain is present will be described.

### (A) Substrate having a surface where a graft polymer chain is present:

A graft polymer chain is present on the surface of the substrate in the invention. For this, a graft polymer chain having a hydrophilic functional group such as an acid group, a functional group having a metal salt structure, or a functional group having affinity with metals (the graft polymer chain will be hereinafter sometimes referred to as "functional graft polymer") may be directly bound on the surface of the substrate. Further, there may be employed an embodiment in which an intermediate layer to which the graft polymer is liable to bind is provided on the surface of the substrate, and the polymer is grafted on the intermediate layer.

In addition, the surface of the substrate in the invention includes an embodiment in which a polymer having the functional group-containing functional graft polymer chain bound to a trunk polymer compound, or a polymer having the graft polymer chain bound to a trunk polymer compound and having a crosslinkable functional group introduced thereinto, is aligned on the surface of the substrate by coating or coating and crosslinking; and an embodiment in which a composition containing the functional group-containing polymer having a crosslinking group in the polymer end terminals and a crosslinking agent is aligned on the surface of the substrate by coating or coating and crosslinking.

The graft polymer of the invention is characterized by having a structure in which end terminals of the polymer are bound to the surface of the substrate or the surface layer of the substrate, and a functional graft moiety to reveal specific physical properties such as hydrophilicity and affinity with metals is not substantially crosslinked. This structure brings a characteristic such that the polymer moiety to reveal the affinity with metals or metal ions is neither restricted in terms of the mobility nor embedded within the firm crosslinking structure, thereby keeping the high mobility. For this reason, it is considered that the graft polymer of the invention reveals superior affinity with metal salts as compared with polymers having a usual crosslinking structure.

Such a functional graft polymer chain has a molecular weight Mw in a range from 500 to 5,000,000, preferably from 1,000 to 1,000,000, and more preferably from 2,000 to 500,000.

In the invention, (a) one in which the functional graft polymer chain is bound directly on the surface of the substrate or on the intermediate layer provided on the surface of the substrate is called "surface graft"; and (b) one in which the functional graft polymer chain is introduced into the polymer crosslinked film structure is called "functional graft chain-introduced crosslinked hydrophilic layer". Further, in the invention, the substrate or the material in which the intermediate layer is provided on the substrate will be sometimes abbreviated as "substrate".

### [(a) Preparation of surface graft]

As a method for preparing a surface comprising the functional graft polymer on the substrate, there are two methods of a method for adhering the substrate and the graft polymer through chemical bonding and a method for polymerizing a compound having a polymerizable double bond starting from the substrate as a starting point, to prepare the graft polymer.

First of all, the method for adhering the substrate and the graft polymer through chemical bonding will be described.

In this method, using a polymer having a functional group that is reactive with the substrate in end terminals or side chains thereof, the functional group and a functional group on the surface of the substrate can be grafted by chemical reaction. The functional group that is reactive with the substrate is not particularly limited so far as it can react with the functional group on the surface of the substrate. Examples include a silane coupling group (such as alkoxysilanes), an isocyanate group, an amino group, a hydroxyl group, a carboxyl group, a sulfonic group, a phosphoric group, an epoxy group, an allyl group, a methacryloyl group, and an acryloyl group. As the polymer having a reactive functional group in end terminals or side chains thereof are particularly useful functional polymers having a trialkoxysilyl group in end terminals thereof, functional polymers having an amino group in end terminals thereof, functional polymers having a carboxyl group in end terminals thereof, functional polymers having an epoxy group in end terminals thereof, and functional polymers having an isocyanate group in end terminals thereof.

Further, among the functional polymers to be used, those having an acid group having superior adsorptivity to a metal ion will be described. The functional polymer to be used herein is not particularly limited so far as it is hydrophilic. Specific examples include polyacrylic acid, polymethacrylic acid, polystyrenesulfonic acid, poly-2-acrylamide-2-methylpropanesulfonic acid, and salts of these acids, polyacrylamide, and polyvinylacetamide. Besides, polymers of a functional monomer to be used in the surface graft polymerization as described later, or copolymers containing this functional monomer can be advantageously used.

The method for polymerizing a compound having a polymerizable double bond starting from the substrate as a starting point, to form the graft polymer is generally called "surface graft polymerization". The surface graft polymerization method means a method in which active species is given on the surface of the substrate by a method such as plasma irradiation, photo-irradiation, and heating, and a compound having a polymerizable double bond aligned so as to bring into contact with the substrate is polymerized to bind to the substrate.

As the surface graft polymerization method for carrying out the invention, any of the known methods described in literature documents can be used. For example, photo-induced graft polymerization and plasma-irradiated graft polymerization are described as the surface polymerization method in *New Study of Experimentation of Polymers 10,* page 135 (1994), edited by The Society of Polymer Science, Japan and published by Kyoritsu Shuppan Co., Ltd. Further, radiation (such as γ-rays and electron beams) - irradiated graft polymerization is described in Takeuchi ed., *Adsorption Technology Handbook,* page 203 and page 695, published in February 1999 by NTS. As specific methods of the photo-induced graft polymerization can be used the methods as disclosed in JP-A Nos. 63-92658, 10-296895 and 11-119413. In the plasma-irradiated graft polymerization and radiation-irradiated graft polymerization, the methods described in the literature documents as cited above and Y. Ikada, et al., *Macromolecules,* Vol. 19, page 1804 (1986) can be applied.

Concretely, the surface of a polymer such as PET is treated with plasma or electron beams to generate radicals in the surface, and the thus activated surface is reacted with a hydrophilic functional group-containing monomer, whereby the graft polymer surface layer, i.e., the hydrophilic group-containing surface layer, can be obtained.

The photo-induced graft polymerization can also be carried out by coating a photo-polymerizable composition on the surface of a film substrate and bringing it into contact with an aqueous radical-polymerizable compound, followed by irradiation with light, as disclosed in JP-A No. 53-17407 (Kansai Paint Co., Ltd.) and JP-A No. 2000-212313 (Dainippon Ink and Chemicals Incorporated) in addition to the literature documents as cited above.

### (Compound having a polymerizable double bond useful for surface graft polymerization)

The compound useful for forming the functional graft polymer chain is required to have a polymerizable double bond and to have a functional group having functional characteristics. As such compounds, any of functional polymers, functional oligomers and functional monomers so far as they have a double bond in the molecule thereof. Of these are particularly preferable the functional monomers.

With respect to the functional monomers that are useful in the invention, examples of hydrophilic monomers include monomers having a positive charge, such as ammonium and phosphonium, and monomers having an acid group having a negative charge or capable of being dissociated into a negative charge, such as a sulfonic group, a carboxyl group, a phosphoric group, and a phosphonic group. These monomers are properly selected depending upon the metal ion to be used in combination. Besides, hydrophilic monomers having a nonionic group such as a hydroxyl group, an amide group, a sulfonamide group, an alkoxy group, and a cyano group can also be used.

Specific examples of the hydrophilic monomer that is particularly useful in the invention include (meth)acrylic acid or its alkali metal salts and amine salts, itaconic acid or its alkali metal salts and amine salts, allylamine or its hydrohalic acid salts, 3-vinylpropionic acid or its alkali metal salts and amine salts, vinylsulfonic acid or its alkali metal salts and amine salts, styrenesulfonic acid or its alkali metal salts and amine salts, 2-sulfoethylene (meth)acrylate and 3-sulfopropylene (meth)acrylate or their alkali metal salts and amine salts, 2-acrylamide-2-methylpropanesulfonic acid or its alkali metal salts and amine salts, acid phosphoxypolyoxyethylene glycol mono(meth)acrylate or its salts, 2-dimethylaminoethyl (meth)acrylate or its hydrohalic acid salts, 3-trimethylammoniumpropyl (meth)acrylate, 3-trimethylammoniumpropyl (meth)acrylamide, and N,N,N-trimethyl-N-(2-hydroxy-3-methacryloyloxypropyl)ammonium chloride. Further, 2-hydroxyethyl (meth)acrylate, (meth)acrylamide, N-monomethylol (meth)acrylamide, N-dimethylol (meth)acrylamide, N-vinylpyrrolidone, N-vinylacetamide, and polyoxyethylene glycol mono(meth)acrylate are also useful.

Further, as the monomer having a metal salt structure are enumerated metal salts of the foregoing hydrophilic monomers, and preferably silver salts of (meth)acrylic acid or styrenesulfonic acid. Specific examples include acrylic acid silver salt, methacrylic acid silver salt, and styrenesulfonic acid silver salt. As the monomer having high affinity with metal salts are enumerated polyvinylpyrrolidone, poly(sodium styrenesulfonate), polyvinylpyridine, and polyvinylaniline.

### [(b) Preparation of functional graft chain-introduced crosslinked hydrophilic layer]

The functional graft chain-introduced crosslinked hydrophilic layer of the invention can be prepared by preparing a graft polymer using the known method as the synthesis of general graft polymers and then crosslinking the graft polymer. Concretely, the synthesis of graft polymers is described in Fumio Ide ed., *Graft Polymerization and Its Application,* published in 1977 by Kobunshi Kankokai, Inc. and *New Study of Experimentation of Polymers 2,* "Synthesis and Reaction of Polymers", (1995), edited by The Society of Polymer Science, Japan and published by Kyoritsu Shuppan Co., Ltd.

The synthesis of the graft polymer is basically classified into the three methods of (1) to polymerize a branched monomer from a trunk polymer, (2) to bind a branched polymer to a trunk polymer, and (3) to copolymerize a branched polymer with the trunk polymer (macromer method). The hydrophilic surface in the invention can be prepared by using any of these three methods. Especially, the macromer method (3) is superior from the standpoints of production aptitude and control of the film structure. The synthesis of the graft polymer using a macromer is described in *New Study of Experimentation of Polymers 2,* "Synthesis and Reaction of Polymers", (1995), edited by The Society of Polymer Science, Japan and published by Kyoritsu Shuppan Co., Ltd. as cited above. Also, it is described in detail in Yu Yamashita, et al., *Chemistry and Industry of Macro Monomers,* by IPC (1989).

Concretely, the functional macromers can be synthesized according to the methods as described in the literature documents by using the functional monomer including the hydrophilic monomers specifically described above as the organic crosslinked hydrophilic layer, such as acrylic acid, acrylamide, 2-acrylamide-2-methylpropanesulfonic acid, and N-vinylacetamide.

With respect to the functional macromers that are used in the invention, examples of the hydrophilic macromers that are particularly useful include macromers derived from a carboxyl group-containing monomer such as acrylic acid and methacrylic acid; sulfonic acid-based macromers derived from a monomer such as 2-acryamide-2-methylpropanesulfonic acid, styrenesulfonic acid, and their salts; amide-based macromers of, e.g., acrylamide, methacrylamide; amide-based macromers derived from an N-vinylcarboxylic acid amide monomer such as N-vinylacetamide and N-vinylformamide; macromers derived from a hydroxyl group-containing monomer such as hydroxyethyl methacrylate, hydroxyethyl acrylate, and glycerol monomethacrylate; and macromers derived from an alkoxy group- or ethylene oxide group-containing monomer such as methoxyethyl acrylate, methoxypolyethylene glycol acrylate, and polyethylene glycol acrylate. Further, monomers having a polyethylene glycol chain or a polypropylene glycol chain can be usefully used as the macromer of the inention.

Useful examples of the macromer having a metal salt structure include macromers derived from a silver salt of (meth)acrylic acid or a silver salt of styrenesulfonic acid. Examples of the macromer having high affinity with metal salts include macromers derived from polyvinylpyrrolidone or poly(sodium styrenesulfonate).

A molecular weight of the useful macromer is in the range of from 400 to 100,000, preferably from 1,000 to 50,000, and particularly preferably from 1,500 to 20,000. When the molecular weight of the macromer is less than 400, the desired effects cannot be exhibited, whereas when it exceeds 100,000, the polymerization properties of the macromer with a copolymerizable monomer forming the main chain become worse.

As one method for preparing the functional graft chain-introduced crosslinked layer after the synthesis of the functional macromer, there is employed a method in which the functional macromer is copolymerized with other monomer having a reactive functional group to synthesize a graft-copolymerized polymer, and the synthesized graft-copolymerized polymer and a crosslinking agent that reacts with the reactive functional group of the polymer are then coated on the substrate and reacted for crosslinking by heat to prepare the functional graft chain-introduced crosslinked layer. As other method, there is a method in which the functional macromer and a graft polymer having a photocrosslinkable group or a polymerizable group are synthesized, coated on the substrate and then reacted for crosslinking upon irradiation with light to prepare the functional graft chain-introduced crosslinked layer.

Thus, the hydrophilic surface where the functional graft polymer chain is present can be provided on the substrate. A film thickness of the layer forming the hydrophilic surface can be selected depending on the object. In general, the film thickness is preferably in the range of from 0.001 µm to 10 µm, more preferably from 0.01 µm to 5 µm, and most preferably from 0.1 µm to 2 µm. When the film thickness is too thin, the scratch resistance of the metal film is liable to be lowered, whereas when it is too thick, the adhesiveness-enhancing effect is liable to be lowered.

### (B) Formation of metal film:

In the thus obtained functional graft polymer chains, with respect to (1) one in which the monomer having a metal salt structure is grafted, reduction processing to be subsequently carried out is carried out as it stands, to prepare the metal film. On the other hand, with respect to (2) one where the acid group-containing graft polymer is present, after adsorbing a metal ion, reduction processing is carried out; and with respect to (3) one where the graft polymer chain having high affinity with metal salts is present and (4) one where the hydrophilic graft polymer chain is present (in this case, one having a positive charge is also employable), after impregnating with a solution having a metal salt dissolved therein and dipping and adsorbing the metal salt (solution) in the graft polymer, reduction processing is carried out to prepare the metal film.

### [Metal salt]

In the invention, as the metal salt that is used for adsorbing a metal ion in the acid group moiety of the acid group-containing hydrophilic graft polymer as in (2) above, there are no particular limitations so far as the metal salt is dissociated into a metal ion and a base (anion) when it is dissolved in a proper solvent and imparted onto the hydrophilic surface. Examples include M(NO₃)ₙ, MClₙ, M_{2/n}(SO₄), and M_{3/n}(PO₄), wherein M represents an arbitrary metal atom having a valence of n, which is suitable for applications as described later.

As the specific examples of the metal salt that is used in the invention, for example, in the case where the thin-layer metal film according to the invention is used for the purpose of the electromagnetic radiation shielding effect, examples of the metal atom represented by M includes Ag, Cu, Al, and Ni. Of these are particularly preferable Ag and Cu from the standpoint of high conductivity.

In the case where the thin-layer metal film according to the invention is used for the purpose of imparting the magnetic characteristics, examples of the metal atom represented by M include Co, Ni, and Fe. Further, alloys containing such a metal atom as a major component are also employable. Of these are particularly preferable Co and Ni from the standpoint of superior magnetic characteristics.

In the case where the thin-layer metal film according to the invention is used as a hydrogen permeable film, examples of the metal atom represented by M include Pd, a Pd-Ag alloy, a Pd-Y alloy, a Pd-Gd alloy, a Pd-Ag-Y alloy, and a Pd-Au alloy. Of these is particularly preferable Pd because its selective permeability to hydrogen is high.

As a method for adsorbing the metal salt on the hydrophilic graft surface as a metal ion, there may be employed a method in which the metal salt is dissolved in a suitable solvent, and the solution having a dissociated metal ion is coated on the hydrophilic surface where the hydrophilic graft polymer chain is present, or the substrate having the hydrophilic surface is dipped in the solution.

By bringing into contact with the solution containing a metal ion, the metal ion is ionically adsorbed on the hydrophilic group of the hydrophilic graft polymer chain. Further, by impregnating the substrate wherein the graft polymer chain having high affinity with metal salts with the solution having the metal salt dissolved therein, the metal salt is adsorbed on the substrate. Moreover, there may be the case where the metal salt is adsorbed in a solution state on the hydrophilic group. From the standpoint of thoroughly achieving the adsorption, a concentration of the metal ion or a concentration of the metal salt in the solution to be contacted is preferably in the range of from 1 to 50 % by weight, and more preferably from 10 to 30 % by weight. Further, a contact time is preferably from about 1 to 12 hours.

### [Reducing agent]

In the invention, with respect to a reducing agent that is used for reducing the metal salt or metal ion present in the functional graft polymer chain to form the thin-layer metal film, there are no particular limitations so far as it has physical properties such that it reduces the metal salt compound as used to deposit the metal. Examples of the reducing agent that can be used include aqueous solutions of hypophosphites, tetrahydroborates, hydrazine, and formalin.

The reducing agent can be properly selected depending upon the relation with the metal salt or metal ion to be used. For example, in the case where a silver nitrate aqueous solution is used as the metal salt aqueous solution for supplying the metal ion or metal salt, sodium tetrahydroborate is suitable, and in the case where a palladium dichloride aqueous solution is used, hydrazine is suitable.

With respect to a method of addition of the reducing agent, there are employed a method in which the metal ion or metal salt is adsorbed on the surface where the functional graft polymer is present, the excessive metal salt or metal ion is then removed by rinsing with water, the substrate having the foregoing surface is dipped in water such as ion-exchanged water, and the reducing agent is added thereto; and a method in which an aqueous solution of the reducing agent having a predetermined concentration is directly coated on or added dropwise to the surface of the substrate. Further, with respect to the addition amount of the reducing agent, it is preferred that the reducing agent is added in an excessive amount of an equivalent amount or more to the metal ion. More preferably, the addition amount of the reducing agent is 10 times or more equivalents.

In addition to the aqueous reducing agent, compounds exhibiting a reduction action upon heating can also be used. Examples of the compound exhibiting a reduction action upon heating include thermally decomposable radical generators such as azobisisobutyronitrile (AIBN). Further, there may be employed a method in which using a heat base generator such as a sulfonate of guanidine and a reducing agent such as hydroquinone, a basic compound is released by heating, and the base activates the reducing agent to achieve the reduction.

The presence of the uniform metal film having a high strength by the addition of the reducing agent can be visually confirmed from a metal luster of the surface. Further, its configuration can be confirmed by observing the surface by a transmission electron microscope or AFM (atomic force microscope). Moreover, the film thickness of the thin-layer metal film can be easily measured by a method such as observation of the cut surface by an electron microscope.

### [Substrate]

With respect to the substrate that can be used in the invention, there are no particular limitations so far as it is dimensionally stable and meets necessary requirements such as strength and durability. Further, the shape of the substrate can be arbitrarily selected. That is, a plate-like substrate may be used, and as described previously, the thin-layer metal film can be formed on the surface of a resin-made case for electronic instrument having an arbitrary shape by the foregoing steps. The material of the substrate is not particularly limited, but is only required to form an intermediate layer on which the hydrophilic graft surface can be applied. Representative examples of the material of the substrate include plastics such as polyethylene terephthalate, polyethylene naphthalate, polyethylene, polystyrene, polypropylene, polycarbonate, and polyvinylacetal.

Concretely, for example, in the case where the thin-layer metal film is expected to have an electromagnetic radiation shielding effect, plastics and glass can be suitably used as the material of the substrate. Examples of utilities to which the electromagnetic radiation shielding member is applicable include protective materials of semiconductors and display panels.

In the case where the thin-layer metal film according to the invention is expected to have magnetic characteristics, plastics can be suitably used as the material of the substrate. Examples of utilities to which the member having magnetic characteristics is applicable include magnetic discs, magnetic heads, and magnetic tapes.

In the case where the thin-layer metal film according to the invention is expected to have hydrogen permeability, porous materials of, e.g., plastics can be suitably used as the substrate. Examples of utilities to which the member having hydrogen permeability is applicable include hydrogen permeable films.

The thin-layer metal film according to the invention can be formed on the surface of an arbitrary substrate by simple steps and is an extremely thin layer having superior strength and durability. Accordingly, the thin-layer metal film according to the invention can be expected to be applied to utilities including high-density magnetic discs, magnetic heads, magnetic tapes, magnetic sheets, and magnetic discs, other than the electromagnetic radiation shielding films and hydrogen permeable films as described above, and hence, its application range is widespread.

### EXAMPLES

The present invention will be described below in detail with reference to the Examples, but it should not be construed that the invention is limited thereto.

### Example 1:

### (Formation of hydrophilic surface containing metal salt)

On a PET film (trade name: M4100, manufactured by Toyobo Co., Ltd.) having a film thickness of 0.188 mm, the following photo-polymerizable composition 1 was coated and dried at 80 °C for 2 minutes using a rod bar No. 18. Next, the coated film was preliminarily cured upon irradiation for 10 minutes using a 400-W high pressure mercury vapor lamp (trade name: UVL-400P, manufactured by Riko-Kagaku Sangyo Co., Ltd.), to form an intermediate layer on the substrate.

| [Photo-polymerizable composition 1] | |
|---|---|
| • Allyl methacrylate/methacrylic acid copolymer (molar ratio: 80/20, molecular weight: 100,000) : | 4 g |
| • Ethylene oxide-modified bisphenol A diacrylate (trade name: M210, manufactured by Toagosei Co., Ltd.) : | 4 g |
| • 1-Hydroxycylcohexyl phenyl ketone: | 1.6 g |
| • 1-Methoxy-2-propanol: | 16 g |

Next, the film having the intermediate layer formed thereon was dipped in an aqueous solution containing acrylic acid (10 wt %) and sodium periodate (NaIO₄, 0.01 wt %) and irradiated with light for 30 minutes in an argon atmosphere using a 400-W high pressure mercury vapor lamp. After the irradiation with light, the obtained film was well rinsed with ion-exchanged water, to obtain a substrate 1 having a hydrophilic surface on which acrylic acid had been grafted.

### (Formation of metal film)

The obtained substrate 1 (10 cm × 10 cm) was dipped in an aqueous solution of 15 % by weight of silver nitrate (manufactured by Wako Pure Chemical Industries, Ltd.) for 12 hours and then rinsed with distilled water. Thereafter, the substrate was dipped in 100 mL of distilled water and then reduced by dropwise addition of 30 mL of 0.2 M sodium tetrahydroborate. There was thus formed a uniform thin-layer Ag metal film 1 (film thickness: 0.5 µm) on the surface of the substrate.

### Example 2:

### (Formation of hydrophilic surface containing metal salt)

A porous polytetrafluoroethylene film (trade name: FINE POLYMER, WP-500-100, manufactured by Sumitomo Electric Industries, Ltd.) having a film thickness of 0.1 mm was subjected to oxygen glow processing using a plane magnetron sputtering system (trade name: CFS-10-EP70, manufactured by Shibaura Eletec Corporation) under the following conditions.

| | |
|---|---|
| Initial vacuum | 1.2 × 10⁻³ Pa |
| Oxygen pressure | 0.9 Pa |
| RF glow | 1.5 kW, Processing time: 60 sec |

Next, the glow-processed film was dipped in an acrylic acid aqueous solution (10 wt %) having nitrogen bubbled therein at 70 °C for 7 hours. The dipped film was rinsed with water for 8 hours, to obtain a substrate 2 having a hydrophilic surface on which acrylic acid had been grafted.

### (Formation of metal film)

The obtained substrate 2 (10 cm × 10 cm) was dipped in an aqueous solution of 15 % by weight of palladium dichloride (manufactured by Aldrich Corporation) for 12 hours and then rinsed with distilled water. Thereafter, the substrate was dipped in 100 mL of distilled water and reduced by dropwise addition of 30 mL of 0.2 M sodium tetrahydroborate as a reducing agent, to deposit Pd. There was thus obtained a uniform thin-layer Pd metal film 2 (film thickness: 0.5 µm).

### Example 3:

### (Formation of metal film)

The substrate 1 (10 cm × 10 cm) as obtained in Example 1 was dipped in an aqueous solution of 15 % by weight of cobalt sulfate for 12 hours and then rinsed with distilled water. Thereafter, the substrate was dipped in 100 mL of distilled water and reduced by dropwise addition of 30 mL of 0.2 M sodium hypophosphite. There was thus obtained a uniform thin-layer Co metal film 3 (film thickness: 0.5 µm).

### Example 4:

### (Formation of metal film)

The substrate 1 (10 cm × 10 cm) as obtained in Example 1 was dipped in an aqueous solution of 5 % by weight of silver nitrate (manufactured by Wako Pure Chemical Industries, Ltd.) for 12 hours and then rinsed with distilled water. Thereafter, the substrate was coated with the following dispersion (A) using a coater of Lot No. 14 and reduced by heating at 150 °C for one minute. There was thus obtained a uniform thin-layer Ag metal film 4 (film thickness: 0.5 µm).

| [Dispersion (A)] | |
|---|---|
| • Heat base activator (1) as illustrated below: | 1.9 g |
| • Hydroquinone (reducing agent): | 1.0 g |
| • Polyvinyl alcohol (trade name: PVA205, manufactured by Kuraray Co., Ltd.) : | 32.0 g |
| • 5 % by weight aqueous solution of surfactant (2) as illustrated below: | 0.4 g |
| • Water: | 300 g |

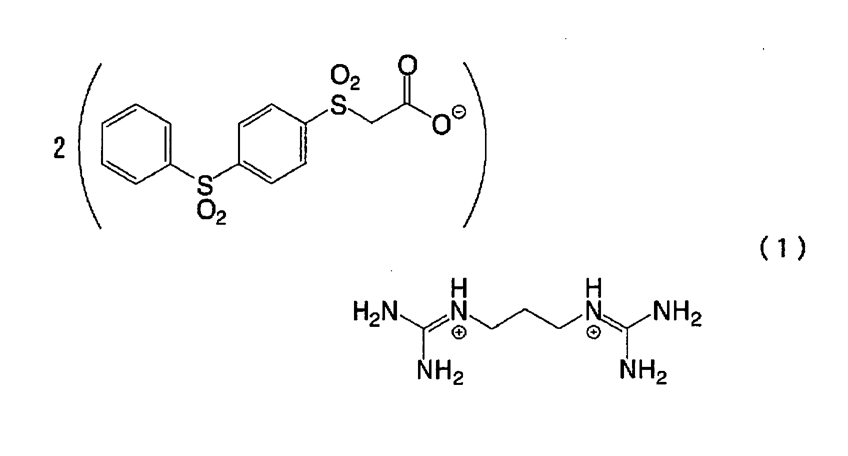

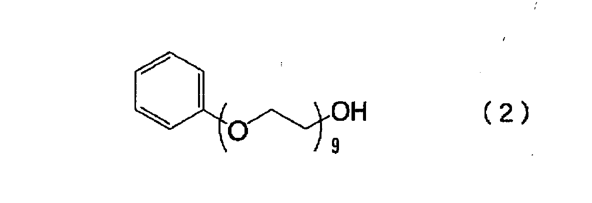

### [Evaluation of thin-layer metal film]

### 1. Film strength (adhesiveness):

Each of the thin-layer metal films 1 to 4 obtained in Examples 1 to 4 was evaluated in terms of film adhesiveness by the cross cut tape method according to JIS K5400. When the cross-cut lattices were subjected to peeling test by an adhesive tape, no lattice was peeled apart. Thus, the adhesiveness to the substrate was confirmed to be good.

### 2. Durability:

Each of the thin-layer metal films 1 to 4 obtained in Examples 1 to 4 was rubbed reciprocally 30 times by a hand using a water-wetted cloth (trade name: BEMCOT, manufactured by Asahi Kasei Corporation). After rubbing, the surface was visually observed. As a result, no peeling of the metal thin film was observed. Further, each of the samples after rubbing was evaluated in terms of film adhesiveness by the cross cut tape method in the same manner as described above. As a result, no lattice was peeled apart, and even after rubbing, the adhesiveness of the metal thin film to the substrate was not lowered, and hence, it was confirmed that the metal thin film had superior durability.

The thin-layer metal film according to the invention has a high density and is superior in durability and productivity, and gives rise to an effect such that it can be prepared by a simple step. The thin-layer metal film according to the invention can be suitably utilized in various fields such as electromagnetic radiation shielding films, magnetic films, and hydrogen permeable films.

## Claims

1. A thin-layer metal film, which is obtained by reducing a metal salt on a surface of a substrate where a metal salt-containing hydrophilic graft polymer chain is present.

2. The thin-layer metal film according to claim 1, wherein the metal salt-containing hydrophilic graft polymer chain is one in which a monomer having a metal salt structure is grafted directly on the surface of the substrate or on an intermediate layer.

3. The thin-layer metal film according to claim 1, wherein the metal salt-containing hydrophilic graft polymer chain is one in which a metal ion is adsorbed on an acid group-containing graft polymer.

4. The thin-layer metal film according to claim 1, wherein the metal salt-containing hydrophilic graft polymer chain is one in which a metal salt is impregnated in a graft polymer having strong affinity with metal salts.

5. The thin-layer metal film according to claim 1, wherein the metal salt-containing hydrophilic graft polymer chain is obtained by dipping the substrate, on which a hydrophillic graft polymer is present, in a metal salt solution to thereby adsorb the metal salt solution on the graft polymer.

6. The thin-layer metal film according to claim 1, wherein end terminals of the graft polymer chain are bound to the surface of the substrate or to a surface layer of the substrate, and a functional graft moiety to reveal specific physical properties is not substantially crosslinked.

7. The thin-layer metal film according to claim 1, wherein the hydrophilic graft polymer chain has a molecular weight in a range from 500 to 5,000,000.

8. A thin-layer metal film, which is obtained by reducing a metal salt on the surface of a substrate where a metal salt-containing functional graft polymer chain is present.

9. The thin-layer metal film according to claim 8, wherein end terminals of the functional graft polymer chain are bound to the surface of the substrate or to a surface layer of the substrate, and a functional graft moiety to reveal specific physical properties is not substantially crosslinked.

10. The thin-layer metal film according to claim 8, wherein the functional graft polymer chain has a molecular weight in a range from 500 to 5,000,000.

11. The thin-layer metal film according to claim 8, wherein the functional graft polymer chain is bound directly to the surface of the substrate or to an intermediate layer provided on the surface of the substrate.

12. The thin-layer metal film according to claim 8, wherein the functional graft polymer chain is introduced into a polymer crosslinked film structure.

13. The thin-layer metal film according to claim 3, wherein the acid group-containing graft polymer is selected from the group consisting of polyacrylic acid, polymethacrylic acid, polystyrenesulfonic acid, poly-2-acrylamide-2-methyl-propanesulfonic acid, salts of these acids, polyacrylamide, and polyvinylacetamide.

14. The thin-layer metal film according to claim 1, wherein the metal salt is a salt of a metal selected from the group consisting of Ag, Cu, Al, and Ni.

15. The thin-layer metal film according to claim 1, wherein the metal salt is a salt of a metal selected from the group consisting of Pd, a Pd-Ag alloy, a Pd-Y alloy, a Pd-Gd alloy, a Pd-Ag-Y alloy, and a Pd-Au alloy.

16. The thin-layer metal film according to claim 1, wherein the reduction is carried out with a solution selected from the group consisting of a hypophosphite solution, a tetrahydroborate solution, a hydrazine solution, and a formalin solution.
